**Europäisches Patentamt**

**European Patent Office**

**Office européen des brevets**

(19)

(11) Veröffentlichungsnummer: **0 509 137 A1**

# (12) EUROPÄISCHE PATENTANMELDUNG

(21) Anmeldenummer: **91118363.0**

(22) Anmeldetag: **28.10.91**

(51) Int. Cl.⁵: **B62D 53/10**

(30) Priorität: **16.04.91 DE 4112405**

(43) Veröffentlichungstag der Anmeldung:
**21.10.92 Patentblatt 92/43**

(84) Benannte Vertragsstaaten:
**DE ES FR GB IT**

(71) Anmelder: **ROCKINGER Spezialfabrik für Anhängerkupplungen GmbH & Co. Waldmeisterstrasse 80 Postfach 45 04 64 W-8000 München 45(DE)**

(72) Erfinder: **Schneider, Frank, Dipl.-Ing. Tannenfleckstrasse 20 W-8038 Gröbenzell(DE)**

Erfinder: **Glässner, Ralf, Dipl.-Ing. Müller-Dachau-Weg 29 W-8060 Dachau(DE)**
Erfinder: **Engler, Thomas, Dipl.-Ing. Richardstrasse 7 RG W-8000 München 50(DE)**

(74) Vertreter: **Weickmann, Heinrich, Dipl.-Ing. et al Patentanwälte H. Weickmann, Dr. K. Fincke F.A. Weickmann, B. Huber Dr. H. Liska, Dr. J. Prechtel Kopernikusstrasse 9 Postfach 86 08 20 W-8000 München 86(DE)**

(54) Sattelkupplungseinrichtung Stichwort: Einhandbetätigungsgriff.

㊼ Es wird eine Sattelkupplungseinrichtung (10) an einem Schleppfahrzeug vorgeschlagen, umfassend eine Sattelplatte (14) mit einer Aufnahme für einen Kupplungszapfen (12) eines Nachlauffahrzeugs, einen Kupplungshaken (20), welcher in einer Kupplungsstellung den Kupplungszapfen (12) in der Aufnahme festlegt, ein Sperrstück (22), welches in einer Sperrstellung den Kupplungshaken (22) in dessen Kupplungsstellung sperrt und in eine Sperrstellung vorgespannt ist, eine mit dem Sperrstück (22) verbundene Betätigungsstange (28), welche zur Überführung des Sperrstücks (22) von seiner Sperrstellung in eine Freigabestellung zwischen einem Betriebsstellungsbereich und einem Rückzugsstellungsbereich verstellbar ist und welche in dem Betriebsstellungsbereich eine zusätzliche Bewegungsmöglichkeit zwischen einer Sicherungsstellung und einer Entsicherungsstellung aufweist, Verriegelungsmittel, welche die Betätigungsstange (28) in deren Betriebsstellungsbereich sichern und ein an der Betätigungsstange (28) angeordnetes Kraftangriffsglied (54) zur Einleitung einer die Betätigungsstange (28) aus dem Betriebsstellungsbereich in den Rückzugsstellungsbereich überführenden Kraft, wobei das Kraftangriffsglied (54) einen Teil der Verriegelungsmittel bildend an der Betätigungsstange (28) beschränkt beweglich angebracht und zwischen einer Verriegelungsstellung und einer Entriegelungsstellung verstellbar ist.

Fig.1

EP 0 509 137 A1

Die Erfindung betrifft eine Sattelkupplungseinrichtung an einem Schleppfahrzeug, umfassend eine Sattelplatte mit einer Aufnahme für einen Kupplungszapfen (Königszapfen) eines Nachlauffahrzeugs,

einen zwischen einer Kupplungsstellung und einer Entkupplungsstellung Verstellbaren Kupplungshaken, welcher in der Kupplungsstellung den Kupplungszapfen in der Aufnahme festlegt,

ein zwischen einer Sperrstellung und einer Freigabestellung bewegliches Sperrstück, welches in seiner Sperrstellung den Kupplungshaken in dessen Kupplungsstellung sperrt,

eine Vorspanneinrichtung, welche das Sperrstück in Richtung auf seine Sperrstellung vorspannt,

eine mit dem Sperrstück verbundene Betätigungsstange, welche zur Überführung des Sperrstücks von seiner Sperrstellung in seine Freigabestellung zwischen einem Betriebsstellungsbereich und einem Rückzugsstellungsbereich verstellbar ist und welche neben ihrem dem Übergang von dem Betriebsstellungsbereich in den Rückzugsstellungsbereichentsprechenden Freiheitsgrad einen zusätzlichen Freiheitsgrad besitzt, der in dem Betriebsstellungsbereich die Einstellung der Betätigungsstange in eine insbesondere durch zusammenwirkende Sicherungsanschläge bestimmte Sicherungsstellung gestattet, in der der Übergang in den Rückzugsstellungsbereich unterbunden ist,

Verriegelungsmittel, welche die Betätigungsstange in deren Betriebsstellung sichern,

und ein Kraftangriffsglied an der Betätigungsstange zur Einleitung einer die Betätigungsstange aus dem Betriebsstellungsbereich in den Rückzugsstellungsbereich überführenden Kraft.

Aus der DE-PS 31 34 765 ist eine Sattelkupplungseinrichtung der eingangs genannten Art bekannt, bei welcher die Verriegelungsmittel von einem an der Sattelplatte gelagerten gegen die Kraft einer Schenkelfeder verschwenkbaren Verriegelungshebel (dort Sicherungshebel genannt) gebildet sind. Der Verriegelungshebel erstreckt sich neben der Betätigungsstange durch einen Durchgang in einem nach unten gerichteten Rand der Sattelplatte. Die Schenkelfeder spannt den Verriegelungshebel in seine Verriegelungsstellung (dort Blockierstellung genannt) vor, in welcher er ein Verschwenken der Betätigungsstange aus ihrer Sicherungsstellung in ihre Entsicherungsstellung verhindert. Zum Entriegeln muß zunächst der Verriegelungshebel gegen die Kraft der Schenkelfeder nach oben in eine Entriegelungsstellung (dort Lösestellung genannt) verschwenkt werden. Der Verriegelungshebel wird in dieser Entriegelungsstellung von einer in dem Durchgang vorgesehenen Ausnehmung aufgenommen. Nunmehr kann die Betätigungsstange aus ihrer Sicherungsstellung in ihre Entsicherungsstellung verschwenkt werden, in welcher durch Überführen der Betätigungsstange aus ihrem Betriebsstellungsbereich in den Rückzugsstellungsbereich ein Abkuppeln des Nachlauffahrzeugs ermöglicht wird.

Diese Sattelkupplungseinrichtung weist einen hohen Sicherheitsstandard auf, da der Verriegelungshebel jedesmal, wenn die Betätigungsstange in ihre Sicherungsstellung verschwenkt wird, insbesondere nach Ankuppeln eines Nachlauffahrzeugs, automatisch in die Verriegelungsstellung zurückkehrt.

Es wurde aber nun gefunden, daß die bekannte Sattelkupplungseinrichtung hinsichtlich ihrer Bedienung noch weiter verbessert werden kann.

Die Aufgabe der Erfindung liegt darin, eine Sattelkupplungseinrichtung der eingangs genannten Art mit vereinfachter Betätigung bereitzustellen bei gleichzeitiger Beibehaltung eines vergleichbaren Sicherheitsstandards.

Diese Aufgabe wird dadurch gelöst, daß das Kraftangriffsglied einen Teil der Verriegelungsmittel bildend an der Betätigungsstange beschränkt beweglich angebracht und zwischen einer Verriegelungsstellung und einer Entriegelungsstellung gegenüber der Betätigungsstange verstellbar ist.

Bei der erfindungsgemäßen Lösung ergibt sich, sofern eine Handbetätigung beabsichtigt ist, eine Einhandbedienbarkeit, da nur das Kraftangriffsglied von Hand erfaßt werden muß und mit der dieses Kraftangriffsglied erfassenden Hand dann alle Bewegungsvorgänge, insbesondere der Entriegelung, der Entsicherung und der Überführung der Betätigungsstange in ihren Rückzugsstellungsbereich, durchgeführt werden können. Ist eine Fernbedienung beabsichtigt, so kann ein Fernbedienungsgerät, etwa ein hydraulisches Kraftgerät, mit dem Kraftangriffsglied so gekoppelt werden, daß mehrere oder alle dieser Bewegungsvorgänge von einem einzigen Kraftgerät durchgeführt werden können.

Einfacher Aufbau der Sattelkupplungseinrichtung wird dadurch erzielt, daß die Betätigungsstange durch einen Durchgang der Sattelplatte oder eines mit der Sattelplatte verbundenen Teils geführt ist, welcher der Betätigungsstange in deren Betriebsstellungsbereich eine zur Verstellung zwischen der Sicherungsstellung und der Entsicherungsstellung notwendige Bewegungsmöglichkeit gewährt und daß an dem Kraftangriffsglied ein einen Teil der Verriegelungsmittel bildendes Füllstück vorgesehen ist, welches in der Verriegelungsstellung in den Durchgang eingreift und in der Entriegelungsstellung aus dem Durchgang zurückgezogen ist.

Damit das Kraftangriffsglied nicht selbsttätig in die Entriegelungsstellung gelangt, wird vorgeschlagen, daß das Kraftangriffsglied in Richtung auf die Verriegelungsstellung elastisch vorgespannt ist.

Eine zusätzliche Sicherung gegen Verschwenken der Betätigungsstange aus der Sicherungsstellung in die Entsicherungsstellung wird dadurch erreicht, daß die Betätigungsstange in Richtung auf die Sicherungsstellung elastisch vorgespannt ist. Insbesondere wird hierdurch und dadurch, daß das Kraftangriffsglied in Richtung auf die Verriegelungsstellung elastisch vorgespannt ist, eine automatische Rückkehr der Sattelkupplungseinrichtung in die gesicherte und verriegelte Kupplungsstellung ermöglicht, wenn nur die Betätigungsstange in den Betriebsstellungsbereich gelangt.

Für eine erste alternative Ausführungsform der Erfindung wird vorgeschlagen, daß das Kraftangriffsglied an der Betätigungsstange in Richtung von deren Überführungsweg zwischen Betriebsstellungsbereich und Rückzugsstellungsbereich linear geführt ist.

Um den Entriegelungsvorgang von dem Vorgang des Betätigungsstangenrückzugs fühlbar zu unterscheiden und um eine erhöhte Abnutzung der zusammenwirkenden Sicherungsanschläge zu vermeiden, ist vorgesehen, daß eine zwischen dem Kraftangriffsglied und der Betätigungsstange wirksame elastische Vorspannkraft kleiner ist als die an der Betätigungsstange wirksame Vorspannkraft, die von der Vorspanneinrichtung des Sperrstücks herrührt.

In Weiterbildung dieser ersten Ausführungsalternative ist vorgesehen, daß das Kraftangriffsglied eine Führungsscheide aufweist, welche auf dem vorzugsweise als Flacheisen ausgebildeten Ende der Betätigungsstange teleskopisch geführt ist. Hierdurch wird das Ende der Betätigungsstange vom Kraftangriffsglied umschlossen und somit sicher geführt. Zur elastischen Vorspannung des Kraftangriffsglieds in Richtung auf die Verriegelungsstellung kann dabei in der Betätigungsstange ein zur Teleskopierrichtung der Führungsscheide parallel Verlaufendes Fenster vorgesehen sein und in dem Fenster eine Schraubendruckfeder aufgenommen sein, welche sich einenends an dem einen Ende des Fensters und andernends an einem in das Fenster eingreifenden Anschlagelement der Führungsscheide abstützt.

Für eine andere alternative Ausführungsform wird vorgeschlagen, daß das Kraftangriffsglied und die Betätigungsstange jeweils als Flacheisen ausgebildet sind, welche durch Langloch-Bolzen-Führungen aneinander geführt sind. Hierdurch wird eine fertigungstechnisch besonders günstige Herstellung der Betätigungsstange und des Kraftangriffsglieds sichergestellt. Zur elastischen Vorspannung des Kraftangriffsglieds in seine Verriegelungsstellung können das Kraftangriffsglied und die Betätigungsstange jeweils eine parallel zu einer durch die Langloch-Bolzen-Führungen vorgegebenen Verstellrichtung verlaufende Ausstellung aufweisen, welche einander gegenüberliegen und einen Aufnahmeraum für eine Schraubendruckfeder bilden.

Für eine weitere alternative Ausführungsform der Erfindung wird vorgeschlagen, daß das Kraftangriffsglied gegenüber der Betätigungsstange um eine Achse parallel zu der der Überführung von dem Betriebsstellungsbereich in den Rückzugsstellungsbereich entsprechenden Bewegungsrichtung verdrehbar ist.

Um auch bei schlechten Sichtverhältnissen, beispielsweise nachts, eine Überprüfung der Sattelkupplungseinrichtung zu ermöglichen, ist vorgesehen, daß an dem Kraftangriffsglied mindestens ein Tastelement angebracht ist, welches die Einstellung der Sicherungsstellung der Betätigungsstange und/oder die Einstellung der Verriegelungsstellung des Kraftangriffsglieds durch Tasten zu ermitteln gestattet, insbesondere durch Ertasten der Relativstellung dieses Tastelements zu einem ebenfalls ertastbaren Bezugselement.

Um eine Zentrierung der Betätigungsstange in eine Sollposition zu ermöglichen, wird Vorgeschlagen, daß das Kraftangriffsglied mit einer konvexen Anlagefläche in eine konkave Gegenanlagefläche der Sattelplatte bzw. des an ihr angebrachten Teils eingreift.

Dadurch, daß die Betätigungsstange in dem Rückzugsstellungsbereich in eine Haltestellung einrückbar ist, in welcher sie das Sperrstück entgegen der Wirkung der Vorspanneinrichtung in seiner Freigabestellung hält, wird vermieden, daß beim Ankuppeln eines Nachlauffahrzeugs die Betätigungsstange während des gesamten Ankuppelvorgangs von Hand in ihrem Rückzugsstellungsbereich gehalten werden muß.

Um einem Bediener der Sattelkupplung, insbesondere der vorstehend beschriebenen Bauart, jederzeit einen Überblick über den Verriegelungszustand der Sattelkupplung oder/und den Verschleißzustand der Sattelkupplung geben zu können, wird Vorgeschlagen, daß Anzeigemittel vorgesehen sind für eine Anzeige, daß sich die Verriegelungsmittel in oder außer der Verriegelungsstellung befinden, oder/und für eine Anzeige des Überschreitens eines vorbestimmten Verschleißzustands im Bereich Kupplungshaken-Sperrstück. Für diesen Vorschlag wird selbständiger Schutz angestrebt, unabhängig von der im kennzeichnenden Teil des Anspruchs 1 vorgeschlagenen Anordnung des Kraftangriffsglieds.

Die Anzeigemittel lassen sich in der Weise ausführen, daß sie wenigstens eine an dem Kraftangriffsglied vorgesehene Tastmarke und ein Abtastelement aufweisen, welches bei einer Verstellung des Kraftangriffsglieds eine Vorbeibewegung der Tastmarke erfaßt. Hierdurch kann in einfacher Weise der Verriegelungs- oder/und Verschleißzustand der Sattelkupplung sensiert werden.

In einer Ausführungsform ist vorgesehen, daß die Tastmarke von einem an dem Kraftangriffsglied angebrachten Magneten und das Abtastelement von einem Magnetsensor gebildet sind. Diese Ausführungsform ermöglicht eine elektronische Sensierung des Verriegelungs- bzw. Verschleißzustands der Sattelkupplung.

In Weiterbildung dieser Ausführungsform wird vorgeschlagen, daß der Magnetsensor ein Fernanzeigegerät steuert, welches beispielsweise in einem Führerstand einer die Sattelkupplung tragenden Sattelzugmaschine vorgesehen ist. Diese Maßnahme ermöglicht eine fortwährende Überprüfung des Zustands der Sattelkupplung, auch während der Fahrt der Sattelzugmaschine.

In einer alternativen Ausführungsform ist die Tastmarke von einer Steuerkante des Kraftangriffsglieds gebildet und das Abtastelement umfaßt einen durch die Steuerkante gegen Federkraft verstellbaren Abtastkörper, der entweder selbst durch seine Stellung gegenüber einer Referenzfläche als Anzeigegerät dient oder ein Anzeigegerät steuert. Hierbei ist es bevorzugt, daß die Steuerkante von einem Ende eines Langlochs an dem Kraftangriffsglied gebildet ist. Diese alternative Ausführungsform zeichnet sich durch besonders einfachen Aufbau und hohe Ausfallsicherheit im oftmals rauhen Alltagbetrieb der Sattelkupplung aus.

Eine einfache Anbringung der Anzeigemittel an der Sattelkupplung, insbesondere mit der Möglichkeit der Nachrüstung der Anzeigemittel, sowie eine Anzeige sowohl des Verriegelungszustands der Sattelkupplung als auch des Verschleißzustands der Sattelkupplung wird dadurch ermöglicht, daß das Abtastelement an einem gegenüber der Sattelplatte fixen Ort angebracht ist und daß an dem Kraftangriffsglied zwei Tastmarken vorgesehen sind, deren eine auf das Abtastelement dann einwirkt, wenn das Kraftangriffsglied in die Entriegelungsstellung überführt wird, und deren andere dann auf das Abtastelement einwirkt, wenn die Betätigungsstange zusammen mit dem in der Verriegelungsstellung befindlichen Kraftangriffsglied aufgrund des Überschreitens des vorbestimmten Verschleißzustands eine vorbestimmte Verlagerung gegenüber einer Neuzustandsstellung erfährt.

Die Erfindung wird im folgenden anhand der Zeichnung an Ausführungsbeispielen erläutert. Es zeigen:

Figur 1 eine Draufsicht auf eine Sattelkupplungseinrichtung in gestrichelt dargestellter gesicherter Sperrstellung und in punktiert dargestellter Auskuppelbereitschaftsstellung;

Figur 2 eine Draufsicht auf die Sattelkupplungseinrichtung gemäß Figur 1, jedoch in Einkuppelbereitschaftsstellung;

Figur 3 das Detail A in Figur 1 in Betrachtungsrichtung III in Figur 1 in vergrößertem Maßstab;

Figur 4 das Detail A in Figur 1 in vergrößertem Maßstab;

Figur 5 einen Schnitt entlang der Linie V-V in Figur 4;

Figur 6 das Detail B in Figur 2 in vergrößertem Maßstab;

Figur 7 eine Darstellung analog Figur 6, jedoch mit der Betätigungsstange in ihrer Haltestellung;

Figur 8 eine Draufsicht auf eine zweite Ausführungsform einer Sattelkupplungseinrichtung in gesicherter Sperrstellung;

Figur 9 einen Schnitt entlang der Linie IX-IX in Figur 8;

Figur 10 eine Ansicht analog Figur 9, jedoch mit dem Kraftangriffsglied in seiner Entriegelungsstellung;

Figur 11 eine Draufsicht auf eine dritte Ausführungsform einer Sattelkupplungseinrichtung mit einer Anzeigevorrichtung;

Figur 12 einen Schnitt entlang der Linie XII-XII in Figur 11;

Figur 13 einen Schnitt entlang der Linie XIII-XIII in Figur 11;

Figur 14 eine Ansicht analog Figur 13, jedoch mit dem Anzeigestift in ausgerückter Stellung und

Figur 15 einen Schnitt analog Figur 12 einer alternativen Ausführungsform der Anzeigevorrichtung.

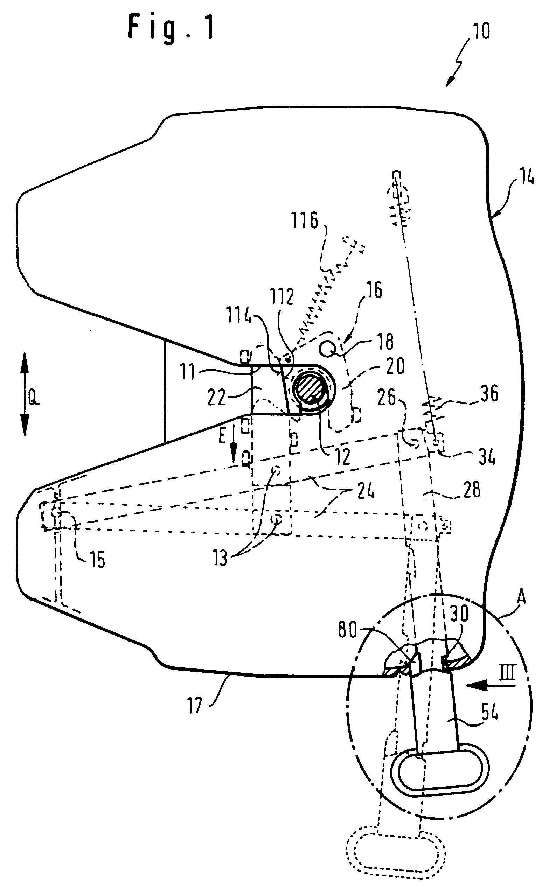

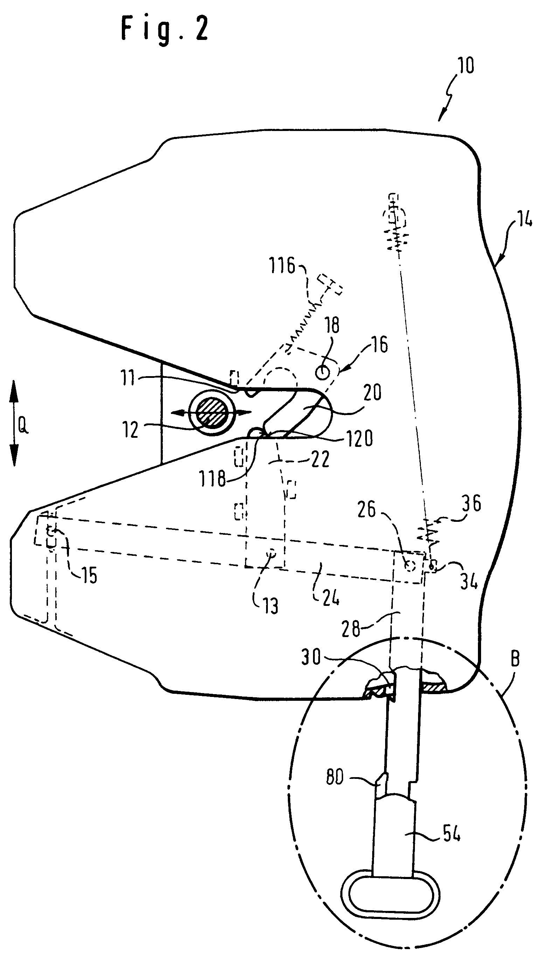

Die in den Figuren 1 und 2 in vereinfachter Darstellung wiedergegebene Sattelkupplungseinrichtung 10 dient der Verbindung eines geschnitten dargestellten Kupplungszapfens 12 (auch Königszapfen genannt) an der Unterseite eines nicht dargestellten Nachlauffahrzeugs mit einer auf einem ebenfalls nicht dargestellten Schleppfahrzeug angebrachten Sattelplatte 14, die auch die vom Nachlauffahrzeug ausgeübten Auflagekräfte aufnimmt. Die Sattelplatte 14 ist an zwei am Schleppfahrzeug angebrachten, nicht dargestellten Lagerböcken um eine Querachse Q beschränkt kippbar befestigt. Ein in Figur 1 und 2 vereinfacht dargestelltes Kupplungsschloß 16 hält den Königszapfen 12 eingekuppelt und gesperrt in einer Nachlaufstellung gemäß Figur 1. Das Kupplungsschloß 16 weist hierzu einen an einem Gelenkbolzen 18 gelagerten Kupplungshaken 20 auf sowie ein in Querrichtung Q verschiebbares Sperrstück 22, das etwa in der Mitte eines Betätigungshebels 24 bei 13 angelenkt ist. Der Hebel 24 ist an seinem in Figur 1 und 2 linken Ende an der Sattelplatte 14 bei 15 schwenkbar gelagert.

Das in Figur 1 und 2 rechte Ende des Betätigungshebels 24 ist über einen Gelenkbolzen 26 mit einem Ende einer Betätigungsstange 28 schwenkbar verbunden. Die Betätigungsstange 28 durchsetzt einen Durchgang 30 in einem abwärts gerichteten Randflansch 17 in der Sattelplatte 14. Am inneren, d.h. schloßnahen, Ende ist die Betätigungsstange 28 mit einem Fortsatz 34 versehen, an dem eine vorgespannte Zugfeder 36 angreift.

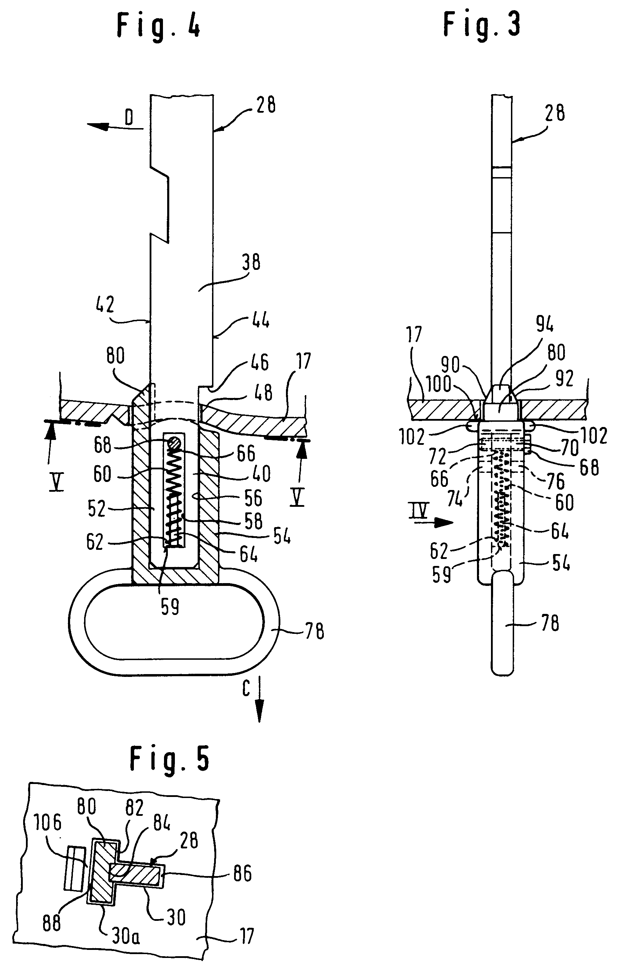

Die Betätigungsstange 28 besitzt, wie aus Figur 4 zu ersehen, einen inneren Längsabschnitt 38, an den sich ein äußerer Längsabschnitt 40 verringerter Breite anschließt. Eine Längsseite 42 der Betätigungsstange 28 verläuft geradlinig. Die zwischen beiden Längsabschnitten 38 und 40 gebildete Stufe auf der gegenüber liegenden Längsseite 44 stellt einen Sicherungsanschlag 46 dar, der in einer Sicherungsstellung (Figur 4) der Betätigungsstange 28 unter der Wirkung der Feder 36 einem Gegenanschlag 48 am am Flansch 17 der Sattelplatte 14 in Längsrichtung der Betätigungsstange 28 gegenüber liegt.

Am äußeren Ende 52 der Betätigungsstange 28 ist ein Kraftangriffsglied 54 angeordnet, welches relativ zur Betätigungsstange 28 in Längsrichtung derselben zwischen einer Verriegelungsstellung (Figur 4) und einer Entriegelungsstellung linear geführt bewegbar ist. Hierzu ist das Ende 52 der Betätigungsstange 28 als Flacheisen ausgebildet und greift in eine am Kraftangriffsglied 54 vorgesehene Führungsscheide 56 ein.

In der Betätigungsstange 28 ist ein zur Bewegungsrichtung C des Kraftangriffsglieds 54 (Figur 4) parallel verlaufendes Fenster 58 vorgesehen, in dem eine Schraubendruckfeder 60 aufgenommen ist (Figur 3 und 4). Die Schraubendruckfeder 60 umgreift mit ihrem äußeren Ende 62 einen im Fenster 58 vorgesehenen Zentriervorsprung 64 und stützt sich an dem äußeren Fensterende 59 ab. Mit ihrem inneren Ende 66 greift die Feder 60 an einen Schraubbolzen 68 an, welcher das Fenster durchsetzt und in zwei einander gegenüber liegenden im Kraftangriffsglied 54 vorgesehenen Bohrungen 70 und 72 aufgenommen ist. Der Zentriervorsprung 64 bildet einen Anschlag für den Schraubbolzen 68, welcher die Auswärtsbewegung der Kraftangriffsglieds 54 gegenüber der Betätigungsstange 28 begrenzt.

Die Schraubendruckfeder 60 spannt das Kraftangriffsglied 54 in seine Verriegelungsstellung gemäß Figur 4 vor, wobei die Schraubendruckfeder 60 auch noch in der Verriegelungsstellung gemäß Figur 4 unter Vorspannung steht. Die Federkraft der Druckfeder 60 bleibt Vorzugsweise bis zum Anschlag des Schraubbolzens 68 an dem Zentrierbolzen 64 kleiner als die von der Feder 36 auf die Betätigungsstange 28 in deren Längsrichtung ausgeübte Zugkraft.

Das Kraftangriffsglied 54 ist zur Handbetätigung mit einem Handgriff 78 versehen. Ist eine Fernbedienung der Betätigungsstange 28 gewünscht, so kann das Kraftangriffsglied 54 ohne weiteres gegen ein entsprechendes Kraftangriffsglied für ein ggf. hydraulisches Kraftgerät ausgetauscht werden.

Befindet sich die Betätigungsstange 28 in ihrer Sicherungsstellung (Figur 4) und das Kraftangriffsglied 54 in seiner Verriegelungsstellung (Figur 4), so greift ein am Kraftangriffsglied 54 angebrachtes Füllstück 80 neben der Betätigungsstange 28 formschlüßig in den T-förmig ausgebildeten Durchgang 30 ein (Figuren 4 und 5). Das Füllstück 80 weist im Bereich seiner Verbindung mit dem Kraftangriffsglied 54 einen im wesentlichen rechteckförmigen Querschnitt auf (Figur 5), wobei an der der Betätigungsstange 28 zugewandten Seite 82 des Füllstücks 80 eine Nut 84 zur Führung auf der Betätigungsstange 28 vorgesehen ist.

Wenn das Kraftangriffsglied 54 gemäß Figur 4 seine Verriegelungsstellung gegenüber der Betätigungsstange 28 einnimmt und folglich das Füllstück 80 den Querschlitz 30a des Durchgangs 30 füllt, so befindet sich die Betätigungsstange 28 in ihrer Sicherungsstellung: sie kann nicht so weit nach links (Figur 4) verschwenkt werden, daß die Stufe 46 an dem Gegenanschlag 48 vorbei nach außen bewegt werden kann. Ist dagegen das Kraftangriffsglied 54 gegenüber der Stellung gemäß Figur 4 so weit zurückgezogen, daß sich das Füllstück 80 außerhalb des Querschlitzes 30a befindet, das heißt, in der Entriegelungsstellung, so kann die Betätigungsstange 28 in Figur 4 nach links in eine Entsicherungsstellung verschwenkt und danach nach außen zurückgezogen werden.

Keilförmig zulaufende Flächen 90, 92 und 94 am Füllstück 80 (Figur 3) erleichtern den Übergang des Kraftangriffsglieds 54 in seine Verriegelungsstellung gemäß Figur 4. Dieser Übergang wird noch dadurch verbessert, daß das Füllstück 80 mit der Schräge beidseits des Schlitzes 84 die Betätigungsstange 28 übergreift.

Befindet sich das Kraftangriffsglied 54 in seiner Verriegelungsstellung gemäß Figur 4, so besteht keine Möglichkeit mehr für eine Bewegung der Betätigungsstange 28 aus ihrer Sicherungsstellung gemäß Figur 4. Die zusammenwirkenden Sicherungsanschläge 46 und 48 verhindern eine Verschiebung der Betätigungsstange 28 in Richtung C. Ein Schwenken der Betätigungsstange 28 in Richtung D wird vom Füllstück 80 ausgeschlossen, wobei selbst hohe Drehmomente auf die Betätigungsstange 28 in die Sattelplatte 14 abgeleitet werden.

Zwei im Kraftangriffsglied 54 vorgesehene, einander gegenüberliegende Bohrungen 74 und 76 (Figur 3) dienen zum einen zur Erleichterung der Montage der Druckfeder 60 und des Schraubbolzens 68 und zum anderen zum Einbringen von Schmiermittel in das Fenster 58.

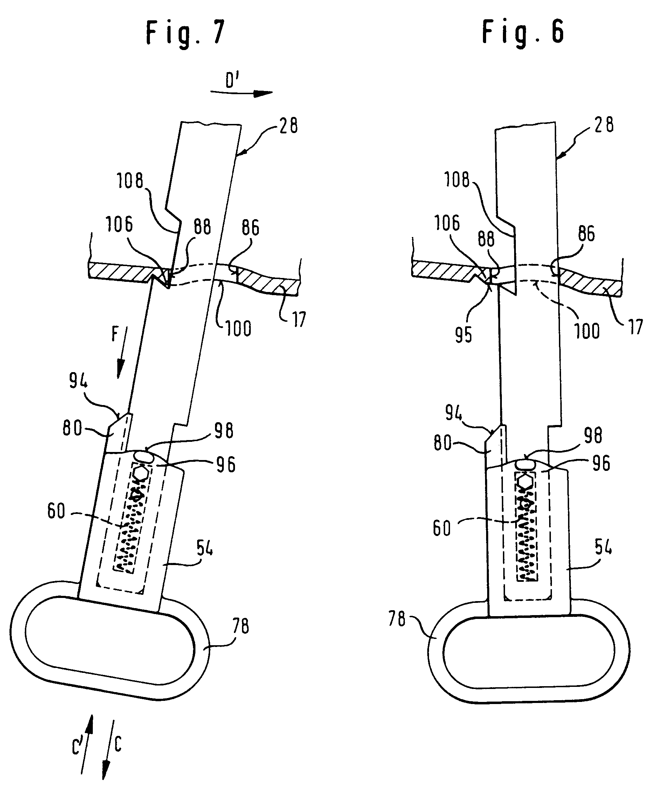

An seinem dem Flansch 17 zugewandten Ende 96 weist das Kraftangriffsglied 54 eine konvexe Anlagefläche 98 auf (Figur 7), die in eine konkave Gegenanlagefläche 100 des Flansches 17 eingreift. Hierdurch wird beim Übergang des Kraftangriffsglieds 54 in seine Verriegelungsstellung gemäß Figur 4 eine zusätzliche Zentrierung des Kraftangriffsglieds 54 in seiner Sollposition erreicht.

Weiter sind an dem Ende 96 des Kraftangriffsglieds 54 zwei Tastelemente 102 (Figur 3) angebracht, die der konkaven Gegenanlagefläche 100 des Flansches 17 gegenüberliegen, wenn sich das Kraftangriffsglied 54 in seiner Verriegelungsstellung befindet. Die ordnungsgemäße Verriegelung der Sattelkupplungseinrichtung 10 kann somit selbst bei schlechten Beleuchtungsverhältnissen jederzeit durch Tasten überprüft werden.

In der in Figur 1 punktiert dargestellten Auskuppelbereitschaftsstellung des Sperrstücks 22 befindet sich die Betätigungsstange 28 in ihrem Rückzugsstellungsbereich (siehe auch Figur 7) und kann in eine Haltestellung gemäß Figur 7 eingerückt werden, in der sie mit einer Rastausnehmung 108 einen Rastvorsprung 106 des Flansches 17 hintergreift. Aufgrund der Hinterschneidung verharrt die Betätigungsstange 28 in der in Figur 7 gezeigten Stellung, obwohl die Zugfeder 36 auf die Betätigungsstange 28 sowohl eine einwärts gerichtete Zugkraft (Richtung C' in Figur 7) als auch ein Schwenkmoment vom Rastvorsprung 106 weg (Richtung D' in Figur 7) ausübt. Wird jedoch die Betätigungsstange 28 durch eine entsprechend große Kraft geringfügig nach außen, das heißt, in Richtung C bewegt, so rastet die Betätigungsstange 28 unter dem Drehmoment der Zugfeder 36 aus dem Rastvorsprung 106 aus und verschwenkt zur Anlage an das rechte Ende 86 des Durchgangs 30 in ihre in Figur 6 dargestellte Position, in der sie gemäß Figur 2 mit dem Kupplungshaken 20 zusammenwirkt, bis dieser durch Einfahren des Kupplungszapfens 12 in seine Kupplungsstellung verschwenkt wird und das Sperrstück 22 in die Sperrstellung (ausgezogene bzw. gestrichelte Stellung in Figur 1) übergehen kann; dann gelangt die Betätigungsstange 28 gemäß Figur 1 wieder in den Betriebsstellungsbereich und wird automatisch in die Sicherungsstellung gemäß Figur 4 durch die Zugfeder 36 verschwenkt und durch das in den Querschlitz 30a einfahrende Füllstück 80 in ihrer Sicherungsstellung verriegelt.

Im folgenden wird die Funktion der Sattelkupplungseinrichtung 10, soweit sie für das Verständnis der Funktion der Sicherheitseinrichtung erforderlich ist, kurz erläutert:
Die Sattelkupplungseinrichtung 10 befindet sich in der in Figur 1 dargestellten gesicherten Nachlaufstellung, in der der Königszapfen 12 durch den Kupplungshaken 20 eingekuppelt und durch das Sperrstück 22 gesperrt ist. Die Zugfeder 36 übt auf den Betätigungshebel 24 ein entgegen dem Uhrzeigersinn in Figur 1 gerichtetes Drehmoment aus, was zur Folge hat, daß das Sperrstück 22 mit einer abgeschrägten Auflauffläche 112 gegen eine entsprechende Auflauffläche 114 des Kupplungshakens 20 gedrückt ist. Der Kupplungshaken 20 liegt am Königszapfen 12 an, dieser wiederum liegt mit einem nicht dargestellten, im Durchmesser vergrößerten Abschnitt am Aussparungsrand der Sattelplatte 14 an. Ein Entfernen des Königszapfens 12 aus dieser Nachlaufstellung ist nicht möglich.

Die Betätigungsstange 28 ist in dieser Lage zweifach gesichert. Zum einen verhindern die zusammenwirkenden Sicherungsanschläge 46 und 48 und die Zugfeder 36 eine Bewegung der Betätigungsstange 28 aus dem Betriebsstellungsbereich (Figur 1 gestrichelt) in den Rückzugsstellungsbereich (Figur 1 punktiert).

Zum anderen wird das Kraftangriffsglied 54 mit seinem formschlüßig in den Durchgang 30 eingerückten Füllstück 80 durch die Druckfeder 60 in Verriegelungsstellung gehalten (Figur 4), wobei das Füllstück 80 eine Bewegung der Betätigungsstange 28 aus der Sicherungsstellung (Figur 4) in die Entsicherungsstellung ausschließt.

Zum Auskuppeln des Königszapfens 12 muß bei Handbetätigung die Bedienungsperson das Kraftangriffsglied 54 zunächst gegen die Kraft der Druckfeder 60 in Richtung C in Figur 4 ziehen, bis der Schraubbolzen 68 am Zentriervorsprung 64 anschlägt. Hierdurch wird das Füllstück 80 aus dem Durchgang 30 entfernt. Die Betätigungsstange 28 verharrt während des Vorgangs aufgrund der größeren elastischen Vorspannkraft der Zugfeder 36 im Betriebsstellungsbereich. Sie kann nunmehr in Richtung D in Figur 4 aus ihrer Sicherungsstellung in ihre Entsicherungsstellung übergeführt werden. In der Entsicherungsstellung liegen die Sicherungsanschläge 46 und 48 sich nicht mehr gegenüber. Somit kann die Betätigungsstange 28 in den Rückzugsstellungsbereich (Figur 1 punktiert) übergeführt und der Rastvorsprung 106 in die Rastausnehmung 108 eingerastet werden.

Nunmehr befindet sich die Sattelkupplungseinrichtung in ihrer in Figur 7 in vergrößertem Maßstab dargestellten Auskuppelbereitschaftsstellung, in der der Königszapfen 12 nach wie vor von dem Kupplungshaken 20 so umfaßt ist, wie in in Figur 1 dargestellt.

Wird nun das Schleppfahrzeug vom Nachlauffahrzeug wegbewegt, so bewegt sich dementsprechend der Königszapfen 12 relativ zur Sattelkupplungseinrichtung 10 in Figur 1 nach links, was ein Verschwenken des Kupplungshakens 20 im Uhrzeigersinn zur Folge hat. Aufgrund einer hierbei auftretenden geringfügigen Verschiebung des Sperrstücks 22 in Richtung E ergibt sich eine gleichgerichtete Verschiebung der Betätigungsstange 28 (in Richtung F in Figur 7), was dazu führt, daß die Betätigungsstange 28 mit ihrer hinterschnittenen Rastausnehmung 108 aus dem Rastvorsprung 106 ausrastet und unter Wirkung der Zugfeder 36 zur Anlage an das rechte Ende 86 des Durchgangs 30 verschwenkt. Nach erfolgtem Auskuppeln des Königszapfens 12 befindet sich die Sattelkupplungseinrichtung 10 in ihrer in den Figuren 2 und 6 dargestellten Kupplungsbereitschaftsstellung. Der Kupplungshaken 20 wird durch das von einer Zugfeder 116 auf ihn ausgeübte Drehmoment in seiner Entkupplungsstellung erhalten. In dieser Stellung verhindert eine Anlagefläche 118 am Kupplungshaken 20, die mit einer Gegenanlagefläche 120 am Sperrstück 22 zusammenwirkt, ein Einrücken des Sperrstücks 22 in seine Sperrstellung. Dadurch wird auch eine Rückkehr der Betätigungsstange 28 in den Betriebsstellungsbereich infolge der Vorspannkraft der Feder 36 ausgeschlossen, das heißt, die Stellung der Betätigungsstange 28 gemäß Figur 6 bleibt zunächst erhalten.

Die Sattelkupplungseinrichtung 10 ist bereit zum erneuten Einkuppeln, ohne daß der Fahrer oder eine sonstige Bedienungsperson an der Sattelkupplungseinrichtung 10 irgendwelche Handgriffe durchzuführen hätte.

Wird nunmehr in der Stellung gemäß Figur 2 ein Königszapfen 12 zum Einkuppeln wieder auf den Kupplungshaken 20 zubewegt, so führt dies zu einem Verschwenken des Kupplungshakens 20 entgegen dem Uhrzeigersinn in Figur 2, so daß schließlich unter der Zugkraft der Feder 36 das Sperrstück 22 in die in Figur 1 ausgezogen bzw. gestrichelt dargestellte Sperrstellung zurückgezogen wird. Gleichzeitig wird die Betätigungsstange 28 aus dem Rückzugsstellungsbereich (Figur 1 punktiert) in den Betriebsstellungsbereich (Figur 1 gestrichelt) zurückgeführt, wobei zunächst die Längsseite 44 im Bereich des Abschnitts 38 an der rechten Seite 86 des Durchgangs 30 entlanggleitet. Bevor der Abschnitt 40 geringerer Breite in den Durchgang 30 eintritt, gelangt die Fläche 94 des Füllstücks 80 zur Anlage an die linke Begrenzungskante 88 des Querschlitzes 30a. Infolge der Kraft der Zugfeder 36 wird die schwächere Druckfeder 60 gespannt, wodurch das Kraftangriffsglied 54 relativ zur Betätigungsstange 28 in seine Entriegelungsstellung übergeführt wird. Sobald der Sicherungsanschlag 46 durch den Durchgang 30 hindurchgetreten ist, wird die Betätigungsstange 28 infolge des von der Zugfeder 36 ausgeübten Drehmoments in ihre Sicherungsstellung gemäß Figur 4 übergeführt, da nunmehr der Abschnitt 40 geringerer Breite den Durchgang 30 durchsetzt. Im Bereich des linken Endes 88 des Querschlitzes 30a ist somit Raum für die Aufnahme des Füllstücks 80, welches durch die Feder 60 in den Durchgang 30 gedrückt wird. Das Kraftangriffsglied 54 kehrt in seine Verriegelungsstellung zurück. Durch Einkuppeln des Königszapfens 12 eines Nachlauffahrzeugs in die Sattelkupplungseinrichtung 10 eines Zugfahrzeugs wird also die zweifache Sicherheitseinrichtung aus den zusammenwirkenden Sicherungsanschlägen 44 und 46 sowie dem formschlüssig in den Durchgang 30 eingreifenden Füllstück 80 automatisch wiederhergestellt.

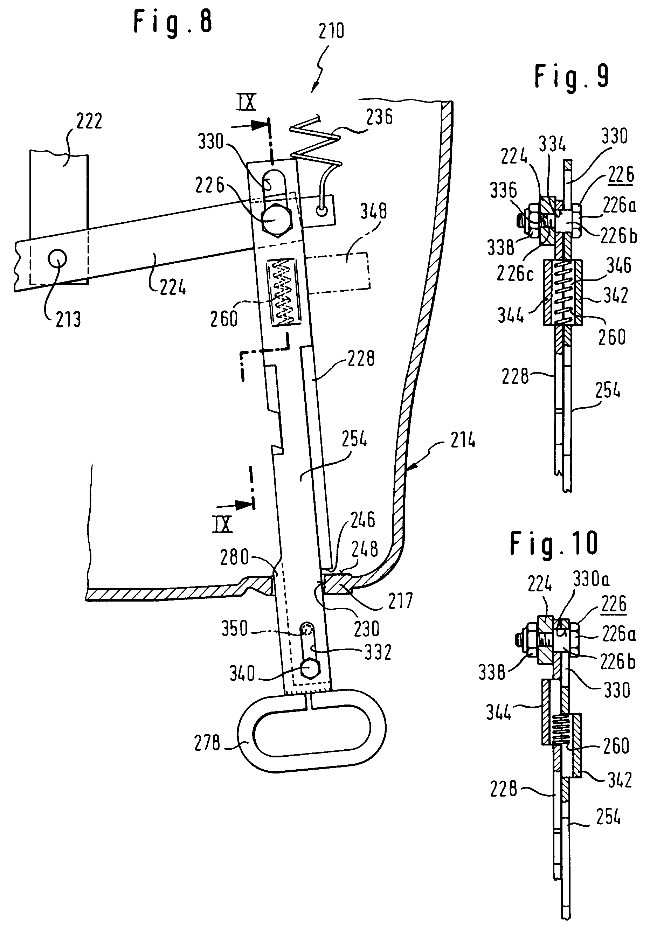

Figur 8 zeigt eine alternative Ausführungsform der Sattelkupplungseinrichtung, bei welcher Betätigungsstange und Kraftangriffsglied als profilierte Flacheisen ausgebildet sind. Die Funktion dieser alternativen Ausführungsform ist gegenüber der vorstehend beschriebenen Ausführungsform unverändert und wird daher im folgenden nicht näher erläutert werden. Diejenigen Teile der alternativen Ausführungsform, die jenen der vorstehend beschriebenen Ausführungsform entsprechen, sind im Vergleich zu den Figuren 1 bis 7 mit gleichen Bezugszeichen versehen, jedoch vermehrt um die Zahl 200.

An einem in Figur 8 nur teilweise dargestellten Sperrstück 222 ist bei 213 ein Betätigungshebel 224 angelenkt. Das in Figur 8 rechte Ende des Betätigungshebels 224 ist über einen Gelenkbolzen 226 mit einem Ende einer Betätigungsstange 228 schwenkbar verbunden. Die Betätigungsstange 228 ist als profiliertes Flacheisen ausgebildet und durchsetzt einen Durchgang 230 in einem abwärts gerichteten Randflansch 217 der Sattelplatte 214.

Auf der Betätigungsstange 228 ist ein ebenfalls als profiliertes Flacheisen ausgebildetes Kraftangriffsglied 254 in Längsrichtung der Betätigungsstange 228 verschiebbar gehaltert. Das Kraftangriffsglied 254 weist hierzu an seinem inneren, dem Betätigungshebel 224 nahegelegenen Ende ein Langloch 330 und an seinem anderen, dem äußeren Ende ein Langloch 332 auf. Der den Betätigungshebel 224 und die Betätigungsstange 228 verbindende Gelenkbolzen 226 durchsetzt auch das Langloch 330. Wie aus den Figuren 9 und 10 zu ersehen ist, weist der Gelenkbolzen 226 an ein Kopfteil 226a anschließend ein zylinderförmiges Teil 226b auf, welches das Langloch 330 und eine in der Betätigungsstange 228 vorgesehene Bohrung 334 durchsetzt. An das Zylinderteil 226b des Gewindebolzens 226 schließt ein Gewindeteil 226c an, welches eine Bohrung 336 im Betätigungshebel 224 durchsetzt und mit einer selbstsichernden Mutter 338 verschraubt ist. In ähnlicher Weise sind die Betätigungsstange 228 und das Kraftangriffsglied 254 im Bereich des Langlochs 232 mittels eines Bolzens 340 (Figur 8) verbunden.

Das Kraftangriffsglied 254 und die Betätigungsstange 228 sind mit zwei Ausstellungen 342 bzw. 344 versehen (Figur 9 und 10), welche einander gegenüberliegen und einen Aufnahmeraum 346 für eine Schraubendruckfeder 260 bilden. Die Schraubendruckfeder 260 spannt das Kraftangriffsglied 254 relativ zur Betätigungsstange 228 in seine Verriegelungsstellung vor und stützt sich in dieser Stellung mit ihren beiden Enden sowohl an der Betätigungsstange 228 als auch am Kraftangriffsglied 254 ab (Figur 9).

Beim Überführen des Kraftangriffsglieds 254 in seine Entriegelungsstellung wird die Schraubendruckfeder 260 gemäß Figur 10 zusammengedrückt und stützt sich mit ihrem inneren Ende am Kraftangriffsglied 254 und mit ihrem äußeren Ende an der Betätigungsstange 228 ab.

Als die Bewegung des Kraftangriffsglieds 254 aus seiner Verriegelungsstellung in seine Entriegelungsstellung begrenzende Anschläge dienen das zylindrische Teil 226b des Gelenkbolzens 226 und das in Figur 10 obere Ende 330a des Langlochs 330. Der durch den Durchmesser des zylindrischen Teils 226b des Gelenkbolzens 226 und die Länge des Langlochs 330 bestimmte Verschiebungsweg des Kraftangriffsglieds 254 zwischen seiner Verriegelungsstellung und seiner Entriegelungsstellung sowie die Längsabmessungen der Ausstellungen 342 und 344 und die Länge der vollständig zusammengedrückten Schraubendruckfeder 260 sind derart aufeinander abgestimmt, daß die Schraubendruckfeder 260 selbst dann nicht vollständig zusammengedrückt wird, wenn sich das Kraftangriffsglied in seiner Entriegelungsstellung befindet (Figur 10).

Wie in dem vorstehend anhand der Figuren 1 bis 7 beschriebenen Ausführungsbeispiel ist auch bei dem Ausführungsbeispiel gemäß den Figuren 8 bis 10 ein Füllstück 280 in den Durchgang 230 eingerückt, wenn sich das Kraftangriffsglied 254 in seiner Verriegelungsstellung befindet. Das Füllstück 280 sichert die Betätigungsstange 228 in ihrem Betriebsstellungsbereich in ihrer Sicherungsstellung. Diese Sicherungsstellung der Betätigungsstange 228 ist durch zusammenwirkende Sicherungsanschläge 246 an der Betätigungsstange 228 und 248 am Randflansch 217 der Sattelplatte 214 gekennzeichnet, welche ein Überführen der Betätigungsstange 228 aus ihrem Betriebsstellungsbereich in den Rückzugsstellungsbereich verhindern.

In der Entriegelungsstellung des Kraftangriffsglieds 254 ist das Füllstück 280 aus dem Durchgang 230 zurückgezogen, so daß die Betätigungsstange in Figur 8 nach links in ihre Entsicherungsstellung verschwenkt werden kann, so daß sich die Sicherungsanschläge 246 und 248 nicht mehr gegenüber liegen. Nunmehr kann die Betätigungsstange entgegen der Kraft der Zugfeder 236 aus ihrem Betriebsstellungsbereich in ihren Rückzugsstellungsbereich übergeführt werden. Zur Einleitung der für die vorstehend beschriebenen Schritte erforderlichen Kräfte ist am Kraftangriffsglied 254 ein Handgriff 278 angeordnet, über welchen die Kräfte von einem Bediener von Hand eingeleitet werden können. Zusätzlich oder alternativ kann ein Ansatz 348 mit dem Kraftangriffsglied verbunden sein, über welchen die Kräfte beispielsweise von einer vom Fahrer betätigbaren Hydraulikeinrichtung automatisch eingeleitet werden können. Zur Befestigung dieser Hydraulikeinrichtung können in der Sattelplatte standardmäßig Halterungen vorgesehen sein, wodurch ein kostengünstiges und einfaches Nachrüsten einer solchen Sattelkupplungs-Betätigungsautomatik ermöglicht wird.

Zur Diebstahlsicherung oder Plombierung bei grenzüberschreitendem Güterverkehr kann im Bereich des Langlochs 232 eine Bohrung 350 in der Betätigungsstange 228 vorgesehen sein. Diese Bohrung 350 kann zur Befestigung eines Vorhängeschlosses oder einer Zollplombe dienen, so daß eine unerwünschte Betätigung der Sattelkupplungseinrichtung verhindert wird bzw. angezeigt wird.

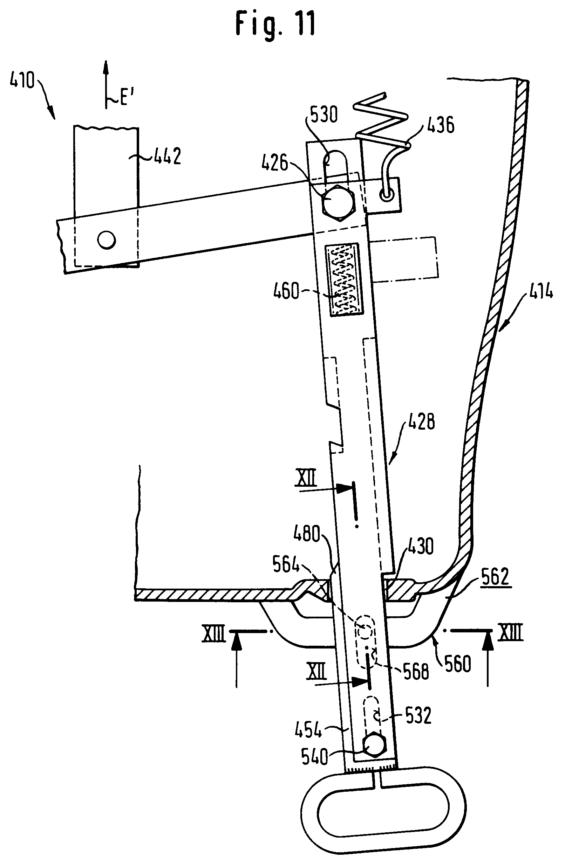

In Figur 11 ist eine weitere Ausführungsform der Sattelkupplungseinrichtung dargestellt, bei welcher die Betätigungsstange und das Kraftangriffsglied wie bei der Ausführungsform gemäß Figur 8 als profilierte Flacheisen ausgebildet sind. Darüber hinaus weist die Ausführungsform gemäß Figur 11 eine Anzeigevorrichtung bzw. Anzeigemittel auf für eine Anzeige, daß sich die Verriegelungsmittel in oder außer der Verriegelungsstellung befinden und eine Anzeige des Überschreitens eines vorbestimmten Verschleißzustands im Bereich Kupplungshaken-Sperrstück.

Die Funktionen des Kuppelns und Verriegelns der Ausführungsform der Sattelkupplungseinrichtung gemäß Figur 11 sind gegenüber den vorstehend beschriebenen Ausführungsformen unverändert und werden daher im folgenden nicht näher erläutert werden. Diejenigen Teile der Ausführungsform gemäß Figur 11, die jenen der ersten Ausführungsform gemäß den Figuren 1 bis 7 entsprechen, sind im Vergleich zu diesen Figuren mit gleichen Bezugszeichen versehen, jedoch vermehrt um die Zahl 400.

Wie vorstehend bereits erwähnt, weist die Ausführungsform gemäß Figur 11 eine Betätigungsstange 428 und ein Kraftangriffsglied 454 auf, die beide als profilierte Flacheisen ausgebildet sind. Im Unterschied zur Ausführungsform gemäß Figur 8 ist jedoch bei der Ausführungsform gemäß Figur 11 die Betätigungsstange 428 oberhalb des Kraftangriffsglieds 454 angeordnet. Die Betätigungsstange 428 und das Kraftangriffsglied 454 sind analog der Ausführungsform gemäß Figur 8 mittels zweier Langloch-Bolzen-Führungen 530/426 und 532/540 relativ zueinander längsverschieblich geführt.

Eine Schraubendruckfeder 460 spannt das Kraftangriffsglied 454 relativ zur Betätigungsstange 428 in seine Verriegelungsstellung vor. Bezüglich der näheren Details der Langloch-Bolzen-Führungen 530/426 bzw. 532/540 sowie der Schraubendruckfeder 460 wird hiermit auf die Beschreibung der Ausführungsform gemäß den Figuren 8 bis 10 Bezug genommen.

Darüber hinaus weist die Ausführungsform gemäß Figur 11 eine Anzeigevorrichtung 560 auf. Ein Gehäuse 562 der Anzeigevorrichtung 560 ist an der Außenseite der Sattelplatte 414 befestigt; es kann beispielsweise an der Sattelplatte 414 festgeschweißt, festgeschraubt, mit ihr vernietet, integral mit ihr ausgebildet sein oder dergleichen. Weiterhin ist es möglich, die Anzeigevorrichtung 560 unmittelbar in den Rand der Sattelplatte zu integrieren.

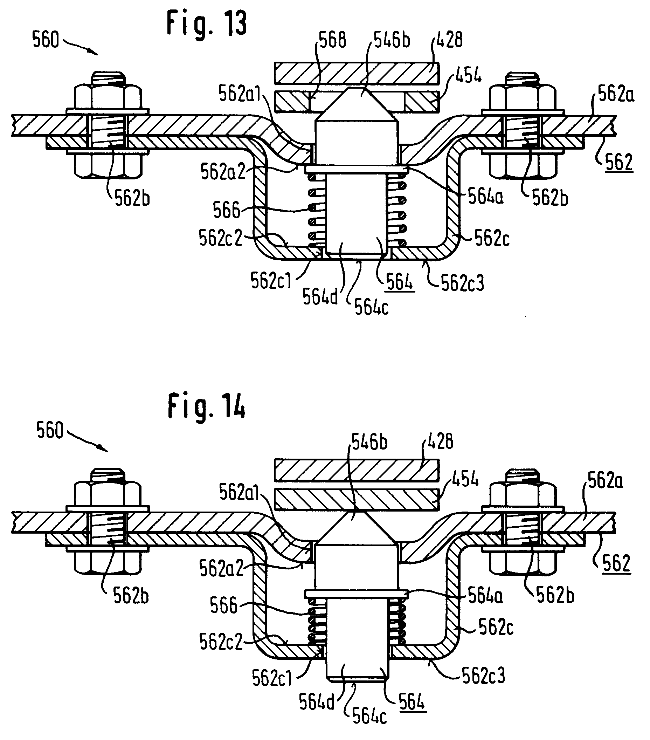

Gemäß Figur 13 umfaßt das Gehäuse 562 eine Grundplatte 562a zur Befestigung an der Sattelplatte 414 und eine mittels Schraub-Verbindungen 562b mit der Grundplatte 562a verbundene, unterhalb dieser angeordnete Zusatzplatte 562c. In zwei Bohrungen 562a1 und 562c1 in der Grundplatte 562a bzw. der Zusatzplatte 562c ist ein Anzeigestift 564 als Abtastelement geführt.

Der Anzeigestift 564 ist zwischen einer eingerückten Stellung gemäß Figur 13 und einer ausgerückten Stellung gemäß Figur 14 verstellbar. Eine Schraubendruckfeder 566 spannt den Anzeigestift 564 in seine eingerückte Stellung gemäß Figur 13 vor. Die Schraubendruckfeder 566 stützt sich einenends an einem Kragen 564a des Anzeigestifts 564 und andernends an einer Oberseite 562c2 der Zusatzplatte 562c ab. In der eingerückten Stellung gemäß Figur 13 liegt der Anzeigestift 564 mit seinem Kragen 564a an einer Unterseite 562a2 der Grundplatte 562a an. Die Zusatzplatte 562c ist zur Aufnahme der Schraubendruckfeder zwischen Grundplatte 562a und Zusatzplatte 562c topfförmig ausgebildet.

In seiner eingerückten Stellung gemäß Figur 13 greift der Anzeigestift 564 mit einem Kopfteil 564b in ein im Kraftangriffsglied 454 vorgesehenes Langloch 568 ein. In dieser Stellung schließt eine Endfläche 564c eines Unterteils 564d des Anzeigestifts 564 im wesentlichen bündig mit einer Unterseite 562c3 der Zusatzplatte 562c ab.

In seiner ausgerückten Stellung gemäß Figur 14 liegt der Anzeigestift 564 mit seinem Kopfteil 564b auf der Unterseite des Kraftangriffsglieds 454 auf. In dieser Stellung ragt das Unterteil 564d des Anzeigestifts 564 deutlich über die Unterseite 562c3 der Zusatzplatte 562c hinaus. Die eingerückte Stellung des Anzeigestifts gemäß Figur 13 und die ausgerückte Stellung des Anzeigestifts gemäß Figur 14 können somit in einfacher Weise durch Tasten unterschieden werden.

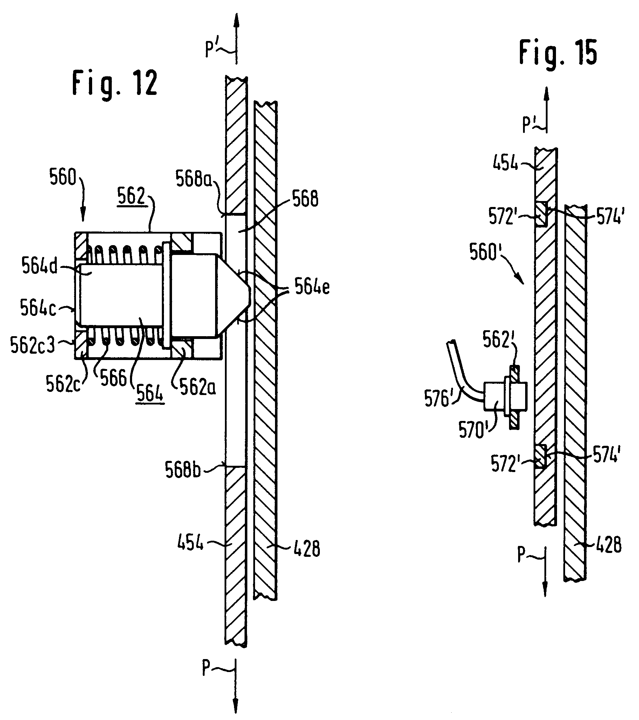

Befindet sich das Kraftangriffsglied 454 in seiner Verriegelungsstellung gemäß Figur 11, das heißt ist ein am Kraftangriffsglied 454 angeordnetes Füllstück 480 in einen Durchgang 430 der Sattelplatte 414 eingeschoben, so befindet sich der Anzeigestift 564 im Bereich des Langlochs 568 und befindet sich dementsprechend infolge der Vorspannung durch die Feder 566 in seiner eingerückten Stellung gemäß Figur 13. Diese Stellung ist auch in Figur 12 dargestellt.

Wird nun das Kraftangriffsglied 454 aus seiner Verriegelungsstellung in seine Entriegelungsstellung überführt, was einer Bewegung des Kraftangriffsglieds 454 in Richtung des Pfeils P in Figur 12 entspricht, so läuft das im Kraftangriffsglied 454 vorgesehene Langloch 568 mit einem als Steuerkante wirkenden Begrenzungsrand 568a gegen eine Steuerfläche 564e des Kopfteils 564b des Anzeigestifts 564 an und überführt den Anzeigestift 564 bei fortschreitender Bewegung des Kraftangriffsglieds 454 in Richtung des Pfeils P aus seiner eingerückten Stellung gemäß den Figuren 12 und 13 in seine ausgerückte Stellung gemäß Figur 14. Der Begrenzungsrand 568a wirkt somit als Tastmarke. Bei einem nachfolgenden Verschwenken der Betätigungsstange 428 zusammen mit dem Kraftangriffsglied 454 aus der Sicherungsstellung der Betätigungsstange 428 heraus und einer anschließenden Bewegung der Betätigungsstange 428 aus ihrem Betriebsstellungsbereich in ihren Rückzugsstellungsbereich verbleibt der Anzeigestift 564 in seiner ausgerückten Stellung gemäß Figur 14. Wird die Betätigungsstange 428 wieder in ihre Sicherungsstellung und wird das Kraftangriffsglied 454 in seine Verriegelungsstellung überführt (Bewegung in Richtung des Pfeils P' in Figur 12), so gelangt der Anzeigestift 564 erst dann in den Bereich des Langlochs 568, wenn das Füllstück 480 zumindest teilweise wieder in die Durchbrechung 430 der Sattelplatte 414 eingerückt ist. Der Anzeigestift 564 kann somit durch die Vorspannung der Feder 566 erst dann wieder in seine eingerückte Stellung zurückgeführt werden, wenn eine ordnungsgemäße Verriegelung der Sattelkupplung sichergestellt ist.

Eine ordnungsgemäße Verriegelung der Sattelkupplung kann somit durch Ertasten der Endfläche 564c des Anzeigestifts 564 überprüft werden. Schließt die Endfläche 564c im wesentlichen mit der Unterseite 562c3 der Zusatzplatte 562c ab, so ist sichergestellt, daß die Sattelkupplung ordnungsgemäß verriegelt ist. Andererseits bedeutet das Vorstehen des Unterteils 564d über die Unterseite 562c3 der Zusatzplatte 562c, daß irgendetwas nicht in Ordnung ist, möglicherweise die Sattelkupplung nicht ordnungsgemäß verriegelt ist.

Neben der Funktion der Verriegelungsanzeige kann durch das Zusammenwirken des Langlochs 568 mit dem Anzeigestift 564 des weiteren auch die Funktion einer Verschleißanzeige für einen Verschleiß des Bereichs Kupplungshaken-Sperrstück der Sattelkupplung bereitgestellt werden. Infolge eines Verschleißes in dem genannten Bereich muß das Sperrstück 422 durch die Vorspannung der Feder 436 (siehe Figur 11) zunehmend in Richtung des Pfeils P' eingerückt werden, um den Kupplungshaken (in Figur 11 nicht dargestellt) sicher in dessen Kupplungsstellung halten zu können. Hierdurch werden die Betätigungsstange 428 und das Kraftangriffsglied 454 mit fortschreitendem Verschleiß durch die Feder 436 zunehmend in die Sattelplatte hinein, das heißt in Richtung des Pfeils P' (Figur 12) gezogen.

Infolge des Verschleißes der Sattelkupplung im Bereich Kupplungshaken-Sperrstück verschieben sich die Betätigungsstange 428 und das Kraftangriffsglied 454 gemäß Figur 12 gegenüber der Anzeigevorrichtung 560 zunehmend in Richtung des Pfeils P'. Entsprechend nähert sich ein als Steuerkante und somit als Tastmarke wirkender Begrenzungsrand 568b des Langlochs 568 zunehmend der Steuerfläche 564e des Anzeigestifts 564. Die Steuerkante 568b ist am Kraftangriffsglied 454 derart angeordnet, daß sie den Anzeigestift 564 bei Überschreiten eines höchstzulässigen Verschleißzustandes des Bereichs Kupplungshaken-Sperrstück vollständig in dessen ausgerückte Stellung (gemäß Figur 14) überführt hat. Ein über die Zusatzplatte 562c hinausragendes Unterteil 564d des Anzeigestifts 564 kann also auch bedeuten, daß der höchstzulässige Verschleiß überschritten wurde und die Sattelkupplung überholungsbedürftig ist.

Der Bediener ist dann jedenfalls gewarnt. Wenn er auch allein aufgrund des Ertastens eines nach unten vorstehenden Unterteils 564d noch nicht weiß, ob die angezeigte Unregelmäßigkeit mangelnde Verriegelung oder Überschreiten des zulässigen Verschleißes bedeutet, so kann er, nachdem er einmal gewarnt ist, dies leicht entscheiden, indem er beispielsweise durch horizontale Querkraft an dem Kraftangriffsglied die Betätigungsstange zu verschwenken sucht. Läßt sich diese verschwenken, so weiß er, daß nicht verriegelt ist. Läßt sie sich nicht verschwenken, so weiß er, daß trotz der empfangenen Anzeige verriegelt ist, also der Verschleißzustand überschritten sein muß. Im ersteren Fall kann er selbst für Abhilfe sorgen. Im zweiten Fall muß er die Verschleißteile ersetzen lassen.

Es sei an dieser Stelle nochmals festgestellt, daß das Langloch derart bemessen ist und derart im Kraftangriffsglied angeordnet ist, daß sich der Anzeigestift nur dann in seiner eingerückten Stellung befindet, wenn einerseits die Sattelkupplung ordnungsgemäß gesichert und verriegelt ist und wenn andererseits der höchstzulässige Verschleiß der Sattelkupplung noch nicht erreicht ist.

Alternativ zu einem Ertasten der Stellung des Anzeigestifts kann zusätzlich ein nicht dargestellter elektrischer Kontakt vorgesehen sein, der beispielsweise nur dann geschlossen ist, wenn sich der Anzeigestift 564 in seiner ausgerückten Stellung gemäß Figur 14 befindet. Durch das Schließen des elektrischen Kontaktes kann eine das Ausgerücktsein des Anzeigestifts 564 anzeigende Meldung an einem Fernanzeigegerät ausgelöst werden.

In Figur 15 ist eine alternative Ausführungsform einer Anzeigevorrichtung dargestellt. Die Anzeigevorrichtung 560' weist ein an der Außenseite der Sattelplatte 414 angebrachtes Gehäuse 562' auf, in dem ein Magnetsensor 570' als Abtastelement gehaltert ist. Zwei Magnete 572', beispielsweise Permanentmagnete, sind in Ausnehmungen 574' des Kraftangriffsglieds 454 angeordnet. Die Magnete 572' wirken als Tastmarken. Der Magnetsensor 570' erfaßt bei einer Bewegung des Kraftangriffsglieds 454 in Richtung der Pfeile P bzw. P' eine Vorbeibewegung der Magnete 572' und gibt ein entsprechendes Erfassungssignal über eine Signalleitung 576' an ein in Figur 15 nicht dargestelltes Fernanzeigegerät aus. Der in Figur 15 linke der Magnete 572' ist in dem Kraftangriffsglied 454 derart angeordnet, daß er bei einer Bewegung des Kraftangriffsglieds 454 in Richtung des Pfeils P', das heißt beim Sichern und Verriegeln der Sattelkupplung, erst dann am Magnetsensor 570' vorbeibewegt wird, wenn ein ordnungsgemäßes Sichern und Verriegeln der Sattelkupplung sichergestellt ist. Der in Figur 15 rechte der Magnete 572' ist in dem Kraftangriffsglied 454 derart angeordnet, daß er bei einer verschleißbedingten Bewegung des Kraftangriffsglieds 454 in Richtung des Pfeils P' bei Überschreiten des höchstzulässigen Verschleißes am Magnetsensor 570' vorbeibewegt wird.

Selbstverständlich wäre es auch möglich, für Verriegelung bzw. Nichtverriegelung einerseits und Überschreiten höchstzulässigen Verschleißes andererseits getrennte Abtastelemente und Anzeigegeräte vorzusehen.

## Patentansprüche

1.  Sattelkupplungseinrichtung (10;210;410) an einem Schleppfahrzeug,
    umfassend eine Sattelplatte (14;214;414) mit einer Aufnahme (11) für einen Kupplungszapfen (12) eines Nachlauffahrzeugs,

    einen zwischen einer Kupplungsstellung und einer Entkupplungsstellung verstellbaren Kupplungshaken (20), welcher in der Kupplungsstellung den Kupplungszapfen (12) in der Aufnahme (11) festlegt,

ein zwischen einer Sperrstellung und einer Freigabestellung bewegliches Sperrstück (22;222;422), welches in seiner Sperrstellung den Kupplungshaken (20) in dessen Kupplungsstellung sperrt,

eine Vorspanneinrichtung (36;236;436), welche das Sperrstück (22;222;422) in Richtung auf seine Sperrstellung vorspannt,

eine mit dem Sperrstück (22;222;422) verbundene Betätigungsstange (28;228;428), welche zur Überführung des Sperrstücks (22;222;422) von seiner Sperrstellung in seine Freigabestellung zwischen einem Betriebsstellungsbereich und einem Rückzugsstellungsbereich verstellbar ist und welche neben ihrem dem Übergang von dem Betriebsstellungsbereich in den Rückzugsstellungsbereich entsprechenden Freiheitsgrad einen zusätzlichen Freiheitsgrad besitzt, der in dem Betriebsstellungsbereich die Einstellung der Betätigungsstange (28;228;428) in eine, insbesondere durch zusammenwirkende Sicherungsanschläge (46,48;246,248) bestimmte, Sicherungsstellung gestattet, in der der Übergang in den Rückzugsstellungsbereich unterbunden ist, Verriegelungsmittel, welche die Betätigungsstange (28;228;428) in deren Betriebsstellungsbereich in der Sicherungsstellung sichern, und ein Kraftangriffsglied (54;254;454) an der Betätigungsstange (28;228;428) zur Einleitung einer die Betätigungsstange (28;228;428) aus dem Betriebsstellungsbereich in den Rückzugsstellungsbereich überführenden Kraft, **dadurch gekennzeichnet,** daß das Kraftangriffsglied (54;254;454) einen Teil der Verriegelungsmittel bildend an der Betätigungsstange (28;228;428) beschränkt beweglich angebracht und zwischen einer Verriegelungsstellung und einer Entriegelungsstellung gegenüber der Betätigungsstange (28;228;428) verstellbar ist.

2. Sattelkupplungseinrichtung (10;210;410) nach Anspruch 1,
**dadurch gekennzeichnet**,
daß die Betätigungsstange (28;228;428) durch einen Durchgang (30;230;430) der Sattelplatte (14;214;414) oder eines mit der Sattelplatte (14;214;414) verbundenen Teils (32) geführt ist, welcher der Betätigungsstange (28;228;428) in deren Betriebsstellungsbereich eine zur Verstellung zwischen der Sicherungsstellung und der Entsicherungsstellung notwendige Bewegungsmöglichkeit gewährt und daß an dem Kraftangriffsglied (54;254;454) ein einen Teil der Verriegelungsmittel bildendes Füllstück (80;280;480) vorgesehen ist, welches in der Verriegelungsstellung in den Durchgang (30;230;430) eingreift und in der Entriegelungsstellung aus dem Durchgang (30;230;430) zurückgezogen ist.

3. Sattelkupplungseinrichtung (10;210;410) nach Anspruch 1 oder 2,
**dadurch gekennzeichnet**,
daß das Kraftangriffsglied (54;254;454) in Richtung auf die Verriegelungsstellung elastisch vorgespannt ist.

4. Sattelkupplungseinrichtung (10;210;410) nach einem der Ansprüche 1 bis 3,
**dadurch gekennzeichnet**,
daß die Betätigungsstange (28;228;428) in Richtung auf die Sicherungsstellung elastisch vorgespannt ist.

5. Sattelkupplungseinrichtung (10;210;410) nach einem der Ansprüche 1 bis 4,
**dadurch gekennzeichnet**,
daß das Kraftangriffsglied (54;254;454) der Betätigungsstange (28;228;428) in Richtung von deren Überführungsweg zwischen Betriebsstellungsbereich und Rückzugsstellungsbereich linear geführt ist.

6. Sattelkupplungseinrichtung (10;210;410) nach Anspruch 5,
**dadurch gekennzeichnet**,
daß eine zwischen dem Kraftangriffsglied (54;254;454) und der Betätigungsstange (28;228;428) wirksame elastische Vorspannkraft kleiner ist als die an der Betätigungsstange (28;228; 428) wirksame Vorspannkraft, die von der Vorspanneinrichtung (36;236;436) des Sperrstücks (22;222;422) herrührt.

7. Sattelkupplungseinrichtung (10) nach Anspruch 5 oder 6,
**dadurch gekennzeichnet**,
daß das Kraftangriffsglied (54) eine Führungsscheide (56) aufweist, welche auf dem vorzugsweise als Flacheisen ausgebildeten Ende (52) der Betätigungsstange (28) teleskopisch geführt ist.

8. Sattelkupplungseinrichtung (10) nach Anspruch 7,
**dadurch gekennzeichnet**,
daß in der Betätigungsstange (28) ein zur Teleskopierrichtung der Führungsscheide (56) parallel verlaufendes Fenster (58) vorgesehen ist und daß in dem Fenster (58) eine Schraubendruckfeder (60) aufgenommen ist, welche sich einenends an dem einen Ende des Fensters (58) und andernends an einem in das Fenster (58) eingreifenden Anschlagelement der Führungsscheide (56) abstützt.

9. Sattelkupplungseinrichtung (210) nach Anspruch 5 oder 6,
   **dadurch gekennzeichnet**,
   daß das Kraftangriffsglied (254) und die Betätigungsstange (228) jeweils als Flacheisen ausgebildet sind, welche durch Langloch-Bolzen-Führungen (330/226,332/340;530/426,532/540) aneinander geführt sind.

10. Sattelkupplungseinrichtung (210) nach Anspruch 9,
    **dadurch gekennzeichnet**,
    daß das Kraftangriffsglied (254) und die Betätigungsstange (228) jeweils eine parallel zu einer durch die Langloch-Bolzen-Führungen (330/226,332/340;530/426,532/540) vorgegebenen Verstellrichtung verlaufende Ausstellung (342,344) aufweisen, welche einander gegenüberliegen und einen Aufnahmeraum (346) für eine Schraubendruckfeder (260) bilden.

11. Sattelkupplungseinrichtung nach einem der Ansprüche 1 bis 4,
    **dadurch gekennzeichnet**,
    daß das Kraftangriffsglied gegenüber der Betätigungsstange um eine Achse parallel zu der der Überführung von dem Betriebsstellungsbereich in den Rückzugsstellungsbereich entsprechenden Bewegungsrichtung verdrehbar ist.

12. Sattelkupplungseinrichtung (10;210;410) nach einem der Ansprüche 1 bis 11,
    **dadurch gekennzeichnet**,
    daß an dem Kraftangriffsglied (54;254;454) mindestens ein Tastelement (102,104) angebracht ist, welches die Einstellung der Sicherungsstellung der Betätigungsstange (28;228;428) und/oder die Einstellung der Verriegelungsstellung des Kraftangriffsglieds (54;254;454) durch Tasten zu ermitteln gestattet.

13. Sattelkupplungseinrichtung (10;210;410) nach einem der Ansprüche 1 bis 12,
    **dadurch gekennzeichnet**,
    daß das Kraftangriffsglied (54;254;454) mit einer konvexen Anlagefläche (98) in eine konkave Gegenanlagefläche (100) der Sattelplatte (14) bzw. des an ihr angebrachten Teils (32) eingreift.

14. Sattelkupplungseinrichtung (10;210;410) nach einem der Ansprüche 1 bis 13,

**dadurch gekennzeichnet**,
daß die Betätigungsstange (28;228;428) in dem Rückzugsstellungsbereich in eine Haltestellung einrückbar ist, in welcher sie das Sperrstück (22;222;422) entgegen der Wirkung der Vorspanneinrichtung (36;236;436) in seiner Freigabestellung hält.

15. Sattelkupplungseinrichtung (10;210;410) nach Anspruch 14,
    **dadurch gekennzeichnet**,
    daß das Sperrstück (22;222;422) durch den aus der Aufnahme (11) ausfahrenden Kupplungszapfen (12) unter Vermittlung des Kupplungshakens (20) derart beeinflußbar ist, daß die mit dem Sperrstück (22;222;422) verbundene, im Rückzugsstellungsbereich befindliche Betätigungsstange (28;228;428) im Rückzugsstellungsbereich verbleibend aus ihrer Haltestellung in eine Einkupplungsbereitschaftsstellung übergeht, in der sie entgegen der Kraft der Vorspanneinrichtung durch die beim Ausfahren des Kupplungszapfens (12) aus der Aufnahme (11) in eine Einkupplungsbereitschaftsstellung gebrachten und verharrenden Teile Kupplungshaken (20) und Sperrstück (22;222;422) gehalten wird und daß die Betätigungsstange (28;228;428) beim Wiedereinfahren des Kupplungszapfens (12) in die Aufnahme (11) durch die dann in ihre Kupplungsbzw. Sperrstellung übergehenden Teile Kupplungshaken (20) und Sperrstück (22;222;422) zur Rückführung in den Betriebsstellungsbereich durch die Vorspanneinrichtung (36;236;436) freigebbar ist, wobei das Kraftangriffsglied (54;254;454) beim Übergang der Betätigungsstange (28;228;428) aus dem Rückzugsstellungsbereich in den Betriebsstellungsbereich entgegen einer an ihn angreifenden elastischen Vorspannung durch Steuerflächen (94, 95) des Kraftangriffsglieds (54;254;454) einerseits und der Sattelplatte (14) andererseits vorübergehend in die Entriegelungsstellung überführbar ist, um den Eintritt der Betätigungsstange (28;228;428) in den Betriebsstellungsbereich zu ermöglichen und anschließend unter gleichzeitigem Übergang der in den Betriebsstellungsbereich eingefahrenen Betätigungsstange (28;228;428) in ihre Sicherungsstellung erneut in die Verriegelungsstellung überführbar ist.

16. Sattelkupplungseinrichtung (410) insbesondere nach dem Oberbegriff des Anspruchs 1 und ggf. nach dem Kennzeichen den Anspruchs 1 oder/und einem der Ansprüche 2 bis 15, gekennzeichnet durch Anzeigemittel (560;560') für eine Anzeige, daß sich die Verriegelungsmittel in oder außer der Verriegelungsstellung befinden, oder/und für eine Anzeige des Überschreitens eines vorbestimmten Verschleißzustands im Bereich Kupplungshaken-Sperrstück.

17. Sattelkupplungseinrichtung (410) nach Anspruch 16,
bei der das Kraftangriffsglied (454) einen Teil der Verriegelungsmittel bildend an der Betätigungsstange (428) beschränkt beweglich angebracht und zwischen einer Verriegelungsstellung und einer Entriegelungsstellung gegenüber der Betätigungsstange (428) verstellbar ist,
**dadurch gekennzeichnet**,
daß die Anzeigemitel (560;560') wenigstens eine an dem Kraftangriffsglied (454) vorgesehene Tastmarke (568a,568b;572') und ein Abtastelement (564;570') umfaßt, welches bei einer Verstellung des Kraftangriffsglieds (454) eine Vorbeibewegung der Tastmarke (568a,568b;572') erfaßt.

18. Sattelkupplungseinrichtung (410) nach Anspruch 17,
**dadurch gekennzeichnet**,
daß die Tastmarke von einem an dem Kraftangriffsglied (454) angebrachten Magneten (572') und das Abtastelement von einem Magnetsensor (570') gebildet sind.

19. Sattelkupplungseinrichtung (410) nach Anspruch 18,
**dadurch gekennzeichnet**,
daß der Magnetsensor (570') ein Fernanzeigegerät steuert, welches beispielsweise in einem Führerstand einer die Sattelkupplung tragenden Sattelzugmaschine vorgesehen ist.

20. Sattelkupplungseinrichtung (410) nach Anspruch 17,
**dadurch gekennzeichnet**,
daß die Tastmarke von einer Steuerkante (568a,568b) des Kraftangriffsglieds (454) gebildet ist und daß das Abtastelement einen durch die Steuerkante (568a,568b) gegen Federkraft (566) verstellbaren Abtastkörper (564) umfaßt, der entweder selbst durch seine Stellung gegenüber einer Referenzfläche (562c3) als Anzeigegerät dient oder ein Anzeigegerät steuert.

21. Sattelkupplungseinrichtung (410) nach Anspruch 20,
**dadurch gekennzeichnet**,
daß die Steuerkante (568a,568b) von einem Ende eines Langlochs (568) in dem Kraftangriffsglied (454) gebildet ist.

22. Sattelkupplungseinrichtung (410) nach einem der Ansprüche 17 bis 21,
**dadurch gekennzeichnet**,
daß das Abtastelement (564;570') an einem gegenüber der Sattelplatte (414) fixen Ort angebracht ist und daß an dem Kraftangriffsglied (454) zwei Tastmarken (568a,568b;572') vorgesehen sind, deren eine auf das Abtastelement (564;570') dann einwirkt, wenn das Kraftangriffsglied (454) in die Entriegelungsstellung überführt wird, und deren anderes dann auf das Abtastelement (564;570') einwirkt, wenn die Betätigungsstange (428) zusammen mit dem in der Verriegelungsstellung befindlichen Kraftangriffsglied (454) aufgrund des Überschreitens des vorbestimmten Verschleißzustands eine vorbestimmte Verlagerung gegenüber einer Neuzustandsstellung erfährt.

# Fig.1

# Fig.2

# Fig. 4

# Fig. 3

# Fig. 5

# Fig. 7

# Fig. 6

Fig.8

Fig.9

Fig.10

# Fig. 11

Fig. 12

Fig. 15

560

562

568a

568

564d

564e

564c

562c3

568b

562c 566 564 562a

454 428

560'

454

572' 574'

562'

576'

570'

572' 574'

428

Fig. 13

Fig. 14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 121 876 (JOST - WERKE GMBH)<br>* Seite 4, Zeile 30 - Seite 6, Absatz 1;<br>Abbildungen 1-4 *<br><br>----- | 1 | B62D53/10 |
| | | | **RECHERCHIERTE SACHGEBIETE (Int. Cl.5 )**<br><br>B62D |

Der vorliegende Recherchenbericht wurde für alle Patentansprüche erstellt

| Recherchenort | Abschlußdatum der Recherche | Prüfer |
|---|---|---|
| DEN HAAG | 01 JULI 1992 | P. CHLOSTA |